# EUROPÄISCHE PATENTANMELDUNG

(11) **EP 2 693 607 A1**
(43) Veröffentlichungstag der Anmeldung: **05.02.2014**
(21) Anmeldenummer: 12178424.3
(22) Anmeldetag: 30.07.2012
(51) Int. Cl.: H02K 3/24, H02K 3/12

(54) **Wicklung für eine elektrische Maschine**

(71) Anmelder: Siemens Aktiengesellschaft, 80333 München (DE)
(72) Erfinder: Kowalski, Waldemar, 45472 Mülheim an der Ruhr (DE); Lehmann, Christoph, 47506 Neukirchen-Vluyn (DE)

(57) **Zusammenfassung**

Die Erfindung betrifft eine Wicklung (1) für eine elektrische Maschine, wobei die elektrische Maschine aus übereinander angeordneten Leiterstäben (2a, ..., 2e) besteht, die jeweils einen Kühlungsschlitz (6a, ..., 6f) aufweisen und derart ausgeführt sind, dass die Höhe der Leiterstäbe (2a, ..., 2e) in radialer Richtung (3) zunimmt sowie der wirksame Kühlungsquerschnitt in radialer Richtung abnimmt.

## Beschreibung

Die Erfindung betrifft eine Wicklung für eine elektrische Maschine, mit mehreren übereinander angeordneten Leiterstäben, wobei die Leiterstäbe jeweils einen in eine Tiefenrichtung ausgebildeten Kühlungsschlitz aufweisen.

Eine elektrische Maschine, wie beispielsweise ein Turbogenerator, ist aus der EP 1 742 330 A1 bekannt. Solch eine elektrische Maschine weist einen antreibbaren, drehbeweglich gelagerten Rotor, der auch Läufer genannt wird, und einen den Rotor umgebenden ortsfesten Stator auf. Der Rotor umfasst eine zylinderförmige Rotorwelle, die sich in Wellenlängsrichtung mittig zu einem Rotorballen verdickt. Der Rotorballen wird auch als Läuferballen bezeichnet. Auf dem Rotorballen ist eine mit einem Strom beaufschlagbare Erregerwicklung angeordnet. Der Stator weist eine Statorwicklung auf. Zur Erzeugung von elektrischer Energie ist die Rotorwelle mit einem Antrieb, insbesondere mit einer Antriebswelle einer Turbine gekoppelt. Auf diese Weise lässt sich der Rotor in eine Drehbewegung gegenüber dem ortsfesten Stator versetzen. Wird dabei die Rotorwicklung von einem Strom durchflossen, so wird ein magnetisches Drehfeld erzeugt, das in der Statorwicklung eine elektrische Spannung induziert. Turbogeneratoren können eine elektrische Leistung zwischen 100 MW und 1500 MW erzeugen.

Es ist des Weiteren bekannt, den Zylindermantel des Rotorballens mit in Wellenlängsrichtung verlaufenden und in Umfangsrichtung zueinander beabstandeten Nuten zu versehen und die Erregerwicklung in diesen Nuten anzuordnen. In den Nuten sind dazu eine Mehrzahl von in Wellenlängsrichtung verlaufende und gegeneinander isolierte Leiterstäbe übereinander gestapelt. Zur Zylindermantelfläche des Rotorballens hin ist ein in eine Profilierung eingeschobener Nutverschlusskeil zum Absichern der Leiterstäbe gegen die bei der Umdrehung des Rotors herrschenden Fliehkräfte vorgesehen. Bei einem Turbogenerator besteht das Bestreben, eine möglichst hohe elektrische Leistung zu erreichen. Die erreichbare elektrische Leistung eines Turbogenerators hängt u. a. von der Magnetfeldstärke des magnetischen Drehfeldes ab, das von der Erregerwicklung des Rotors erzeugt wird. Je höher die Magnetfeldstärke, desto höher ist entsprechend die elektrische Leistung des Turbogenerators.

Da die Leiterstäbe im Betrieb durch die elektrischen Ströme stark erwärmt werden, müssen sie gekühlt werden. Dazu ist es bekannt, die Leiterstäbe mit Luft, Gas oder Wasser zu kühlen. Dabei werden die aus einem leitfähigen Material, insbesondere Kupfer ausgebildeten Leiterstäbe mittels Bohrungen versehen, wobei durch diese Bohrungen ein Kühlungsmedium strömt. Es sind radial ausgerichtete und auch axial ausgerichtete Kühlungspfade in den Leiterstäben bekannt. Beispielsweise werden Kühlungspfade in axialer oder radialer Richtung derart ausgebildet, dass in die übereinander angeordneten Leiterstäbe ein Schlitz eingefräst wird, durch die ein Kühlungsmedium strömen kann. Damit der Wärmeübertrag möglichst groß ist, werden diese Schlitze gestuft ausgeführt, damit an der Stufe eine Verwirbelung des Kühlmediums stattfindet und somit der Wärmeübergangskoeffizient erhöht wird, was zu einer besseren Kühlung führt.

Bei radial mit Luft oder Wasserstoff gekühlten Generatorrotoren werden die Verluste in den Rotorleitern im Aktivteil des Rotors über radiale Kühlungsschlitze in den Leitern an das Kühlgas abgeführt. Die Wärmeabfuhr ist begrenzt durch die Kühloberfläche und den Kühlgasstrom. Die Leitertemperaturen steigen im Aktivteil in der Nut von unten nach oben hin an. Der heißeste Leiter liegt oben in der Nut und begrenzt den zulässigen Rotorstrom.

Zur Verbesserung der Wärmeabfuhr in den radialen Kühlkanälen eines radial gekühlten Generatorrotors ist es bekannt, durch Einbau von Treppen in den Leitern die Verwirbelung des Kühlgases zu vergrößern.

Aufgabe der Erfindung ist es eine Wicklung anzugeben, die eine Verbesserung der Radialkühlung aufweist.

Gelöst wird diese Aufgabe durch eine Wicklung für eine elektrische Maschine, mit mehreren übereinander angeordneten Leiterstäben, wobei die Leiterstäbe jeweils einen in eine Tiefenrichtung ausgebildeten Kühlungsschlitz aufweisen, wobei die Breite der Kühlungsschlitze in radialer Richtung abnimmt.

Erfindungsgemäß wird somit vorgeschlagen, die Kühlungsschlitze derart auszubilden, dass das über einen Nutgrundkanal zugeströmte Kühlungsmedium einen von Leiterstab zu Leiterstab immer enger werdenden Querschnitt erfährt.

Des Weiteren wird erfindungsgemäß vorgeschlagen, die Höhe der einzelnen Leiterstäbe in radialer Richtung zu vergrößern. Das bedeutet, dass die Höhe der einzelnen Leiterstäbe in radialer Richtung zunimmt.

Erfindungsgemäß führt dies dazu, dass die unten in der Nähe des Nutgrundkanals angeordneten Leiterstäbe einer Rotornut eher flacher dimensioniert und mit größeren Kühlschlitzquerschnitten ausgeführt sind. Dementsprechend sind die weiter oben angeordneten Leiter einer Rotornut höher dimensioniert und mit kleineren Kühlschlitzquerschnitten ausgebildet.

Durch die Verringerung der Querschnitte der unteren Leiterstäbe werden die Temperaturen etwas angehoben. Bei den oberen Leitern entsteht ähnliches allerdings in umgekehrter Weise. Die vergleichsweise hohen Temperaturen der Leiterstäbe werden durch den höheren Kupferquerschnitt abgesenkt. Die Reduzierung des Kühlschlitzquerschnitts über der Nuthöhe hat ebenso eine Wirkung, da durch den relativ großen Kühlschlitzquerschnitt die Kühlgasgeschwindigkeit in den unteren Leitern abgesenkt wird, was zu einer Erhöhung der Temperatur der Leiterstäbe führt. Umgekehrt werden die Temperaturen der oben angeordneten Leiterstäbe durch Erhöhung der Kühlgasgeschwindigkeiten als Folge der Reduzierung der Kühlschlitzquerschnitte abgesenkt. Dieser Effekt wird durch die Verwirbelung in den Kühlschlitzen mit abnehmendem Querschnitt entsprechend unterstützt.

Dadurch werden erfindungsgemäß die Temperaturen der Leiterstäbe in radialer Richtung vergleichmäßigt. Ein weiterer Effekt ist, dass der zulässige Strom durch den Leiterstab insgesamt erhöht werden kann. Dies führt u.a. dazu, dass die Gesamtkosten für die Herstellung und das Betreiben einer elektrischen Maschine umfassend solch eine erfindungsgemäß ausgebildete Wicklung insgesamt reduziert werden.

Der Effekt der erfindungsgemäßen Wicklung ist, dass die Temperaturen der obersten Leiter reduziert werden. Was ebenso auch zu einer Erhöhung der Lebensdauer der Wicklung führt.

Die Erfindung wird anhand eines Ausführungsbeispiels näher erläutert.

Es zeigt:
- FIG: eine Querschnittsansicht einer erfindungsgemäßen Wicklung für eine elektrische Maschine.

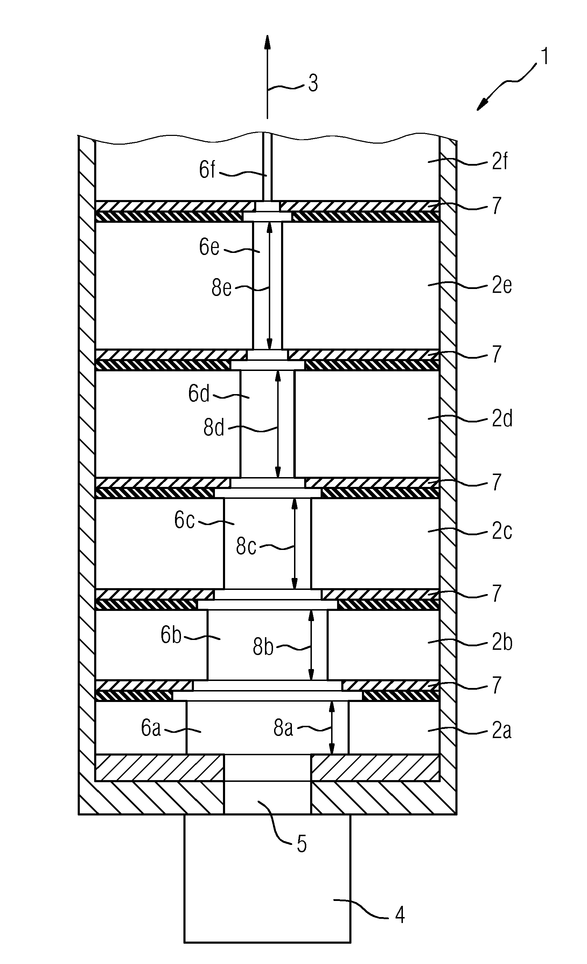

Die in FIG 1 dargestellte Querschnittsansicht zeigt einen Teil einer Wicklung 1 für eine elektrische Maschine. Die Wicklung umfasst mehrere übereinander angeordnete Leiterstäbe 2a, 2b, 2c, 2d und 2e. Diese Leiterstäbe 2a bis 2e sind in einer radialen Richtung 3 übereinander angeordnet. Im Betrieb strömt ein Kühlungsmedium, wie z.B. Luft oder ein Gas durch einen Nutgrundkanal 4 und von dort durch Kühlungsöffnungen 5 durch den ersten Leiterstab 2a. Der erste Leiterstab 2a weist einen ersten Kühlungsschlitz 6a mit einer Breite auf. Zwischen dem ersten Leiterstab 2a und dem zweiten Leiterstab 2b ist eine Isolation 7 angeordnet. Ebenso sind zwischen dem zweiten Leiterstab 2b und dem dritten Leiterstab 2c sowie zwischen den übereinander angeordneten übrigen Leiterstäben 2d usw. eine Isolierung angeordnet. Die Breite der Kühlungsschlitze 6a, 6b, 6c, 6d, 6e und 6f nimmt in radialer Richtung 3 ab. Das bedeutet, dass der Strömungsquerschnitt für das Strömungsmedium in radialer Richtung immer geringer wird. Der Strömungsquerschnitt innerhalb der Kühlungsschlitze 6a, ..., 6f ist bekannt.

Ein zweites wesentliches technisches Merkmal der Leiterstäbe 2a bis 2e ist, dass die Höhe 8a, 8b, 8c, 8d, 8e und 8f zunimmt. Das bedeutet, dass die geringste Höhe 8a der Leiterstab 2a aufweist. Die Höhe nimmt in radialer Richtung jeweils um einen Wert zwischen 5% und 80% zu.

## Patentansprüche

1. Wicklung (1) für eine elektrische Maschine,
mit mehreren übereinander angeordneten Leiterstäben (2a,..., 2e),
wobei die Leiterstäbe (2a, ..., 2e) jeweils einen in eine Tiefenrichtung ausgebildeten Kühlungsschlitz (6a, ..., 6f) aufweisen,
**dadurch gekennzeichnet, dass** die Breite der Kühlungsschlitze (6a, ..., 6f) in radialer Richtung (3) abnimmt.

2. Wicklung (1) nach Anspruch 1,
wobei die Höhe der einzelnen Leiterstäbe (2a, ..., 2e) in radialer Richtung (3) zunimmt.

3. Wicklung (1) nach Anspruch 1 oder 2,
wobei zwischen den Leiterstäben (2a, ..., 2e) Isolierstreifen angeordnet sind.
